# EUROPEAN PATENT SPECIFICATION

(11) **EP 1 165 203 B1**
(45) Date of publication and mention of the grant of the patent: **30.11.2005**
(21) Application number: 00914299.3
(22) Date of filing: 03.04.2000
(51) Int. Cl.: B01D 27/06, B01D 27/08, B01D 27/10, B01D 35/18

(54) **FUEL FILTER**
KRAFTSTOFFFILTER
FILTRE A COMBUSTIBLE

(30) Priority: 01.04.1999 GB 9907564
(43) Date of publication of application: 02.01.2002
(73) Proprietor: Delphi Technologies, Inc., Troy, MI 48007 (US)
(72) Inventor: DECAUX, Daniel, Henri, F-41000 Blois (FR); GAUTHIER, Alan, F-41330 La Chapelle Vendomoise (FR); VAN HOUTTE, Stephane, Jacques, Henri, F-41260 La Chaussée-Saint-Victor (FR)
(74) Representative: Keltie, David Arthur
(86) International application number: PCT/GB2000/001253
(87) International publication number: WO 2000/059602

(56) References cited:
- FR-A- 1 477 891
- GB-A- 2 121 696
- GB-A- 2 333 245
- US-A- 4 683 055
- US-A- 5 290 445

## Description

This invention relates to a filter for use in a fuel system suitable for use in supplying fuel to a compression ignition internal combustion engine.

A filter is incorporated into the fuel system used with a compression ignition internal combustion engine in order to remove particulate contaminants from the flow of fuel to avoid the transmission of such contaminants to, for example, the high pressure fuel pump or the injectors of the fuel system. This is advantageous as the transmission of such contaminants may result in increased wear rates for components of the fuel system or in failure of the components.

A typical filter comprises a filter head including connection ports connected to various parts of the fuel system and a filter bowl removably secured to the filter head and containing a filter medium. The filter medium may form part of a removable filter cartridge located within the filter bowl.

During maintenance, the filter bowl is removed from the filter head and the filter medium is replaced. The bowl is then reattached to the filter head. A number of techniques are known for securing the filter bowl to the filter head. For example a bolt may extend through the filter head and bowl, a nut engaging the bolt to secure the filter head and bowl to one another. Alternatively, the filter bowl and head may be provided with formations which cooperate with one another to secure the filter head and bowl to one another. In either case, a seal arrangement must be provided to avoid fuel leakage between the filter bowl and head.

The provision of an arrangement for securing the filter head and bowl to one another and locating a seal arrangement therebetween results in the filter being of relatively complex form.

Non serviceable filters in which the filter bowl and filter head are non-separable are known. US 4 683 055 discloses a diesel fuel filter comprising a housing accommodating a filter element and a cover non-releasably connected to the housing. GB 2121696A discloses an oil filter, particularly for use with internal combustion engines, comprising a casing and an end cap made of thermoplastic material and welded together. These form a housing in which the filter element, and other components are contained.

GB 2333245A discloses a filter head having a variable flow path and comprising a lower chamber, arranged to communicate with a central part of an associated filter, an upper chamber and a plurality of ports. The filter head may also comprise a temperature sensitive valve which controls the flow of fuel from the high pressure fuel pump back to the filter head.

According to the present invention there is provided a fuel filter comprising a filter body defining an internal chamber within which a filter medium is located, the filter body being of multi part construction, the parts of the filter body being non-removably, sealingly secured to one another, the filter body being shaped to define an inlet port and an outlet port communicating with dirty and clean sides of the filter medium, respectively.

The filter body is preferably a plastics moulded filter body.

As the parts of the filter body are not intended to be separable, replacement of the filter medium during servicing requires replacement of the whole filter. As the filters are pre-assembled, no action needs to be taken during servicing to ensure that fuel leakage from the filter is to be avoided, servicing simply requiring the fuel lines connected to the ports to be removed, the filter replaced with a new filter, and the fuel lines connected to the new filter. The old filter can be discarded.

The parts of the filter body are conveniently secured to one another using a friction welding technique.

Conveniently the filter medium comprises a pleated paper filter member, a first end of which is bonded to a support plate located within the filter body, a second end of the filter member being bonded to the filter body.

The filter body may further define a second inlet port and a return port, and the filter may further comprise a temperature sensitive valve operable to control whether fuel entering the filter body through the second inlet port is supplied to the dirty side of the filter medium or supplied to the return port for return to a fuel reservoir. The valve conveniently comprises a ball valve, the valve member of which is moveable under the influence of a bimetallic element.
Such a valve permits relatively hot fuel to be directed towards the filter medium to reduce fuel waxing under cold engine operating conditions. Further, as the relatively hot fuel has already been filtered, prior to being supplied to the pump and returned to the filter, it is unlikely to contain wax particles. This type of valve may also be used in conventional filter arrangements.

The invention will further be described, by way of example, with reference to the accompanying drawings, in which:

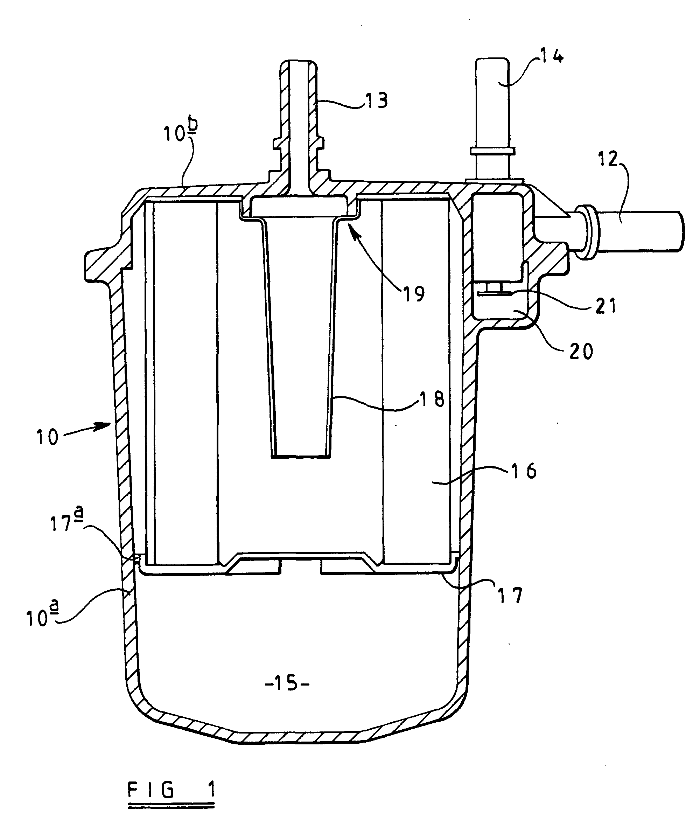

Figure 1 is a sectional view of a filter in accordance with an embodiment; and
Figure 2 is another sectional view of the filter of Figure 1.

The filter illustrated in the accompanying drawings comprises a two piece plastics moulded filter body 10 which comprises a lower part or bowl 10a and an upper part or cap 10b. The upper and lower parts 10a, 10b are designed in such a manner as to be non-removably, sealingly securable to one another using a friction welding technique. The upper part 10b is shaped to define four integral connection ports in the form of connection nipples. The ports comprise a first inlet port 11, a second inlet port 12, an outlet port 13 and a return port 14. Each port is designed for connection to a fuel line or pipe, the first inlet port 11 being arranged to be connected to an inlet pipe which communicates with a low pressure fuel reservoir, the second inlet port 12 being connected to a line whereby excess fuel is returned to the filter from a high pressure fuel pump or from the backleak passages of the fuel injectors of the fuel system. The outlet port 13 is connected to the inlet of a high pressure fuel pump, and the return line 14 is arranged to permit the return of fuel from the filter to the low pressure fuel reservoir.

The filter body 10 defines a volume 15 within which a filter medium 16 is located. The filter medium comprises a pleated paper filter member which is of star-like form in cross-sectional shape. The filter medium 16 is supported, at its lower end, by a lower support plate 17, the outer periphery of which engages the inner surface of the lower part 10a. The upper end of the filter medium 16 is bonded to the inner surface of the upper part 10b of the filter body 10. The manner in which the filter medium 16 is bonded to the filter body 10 and lower support plate 17 is such that fuel can only flow from the outer periphery of the filter medium 16 (the dirty side) to an inner part of the filter medium 16 (the clean side) by flowing through the filter medium 16. The outlet port 13 communicates with the clean side of the filter medium 16. As the filter medium 16 is bonded directly to the filter body 10, the provision of an upper support plate can be avoided.

A downwardly depending tubular member 18 is secured to the inner surface of the upper part 10b, the tubular member 18 being coaxial with the outlet 13.
The provision of the tubular member 18 serves to force fuel to flow in a downward direction prior to entering the tube 18, the fuel subsequently flowing to the outlet port 13. Any air which is carried with the flow of fuel will tend to rise due to its lower density than the fuel and will tend to collect in the upper part of the filter body 10, very little of the air flowing downwardly with the flow of fuel to enter the tubular member 18. The tubular member 18 is provided, adjacent its upper end, with one or more small openings 19 through which air is able to pass at a low rate to continue with the flow of fuel from the filter, in use, as a stream of small bubbles. It is thought that the flow of air as a stream of small bubbles is unlikely to cause the performance of components downstream of the filter, for example the high pressure fuel pump, to be impaired compared to the case where relatively large bubbles of air flow from the filter at an uncontrolled rate.

The filter body 10 defines a side chamber 20 which communicates with the volume 15 through openings (not shown) provided in either the upper part or the lower part of the filter body 10. The first inlet port 11 communicates with the side chamber 20, thus fuel flowing to the filter body 10 through the first inlet port 11 will be supplied through the side chamber 20 to the volume 15, the fuel subsequently flowing through the filter medium to the outlet port 13.

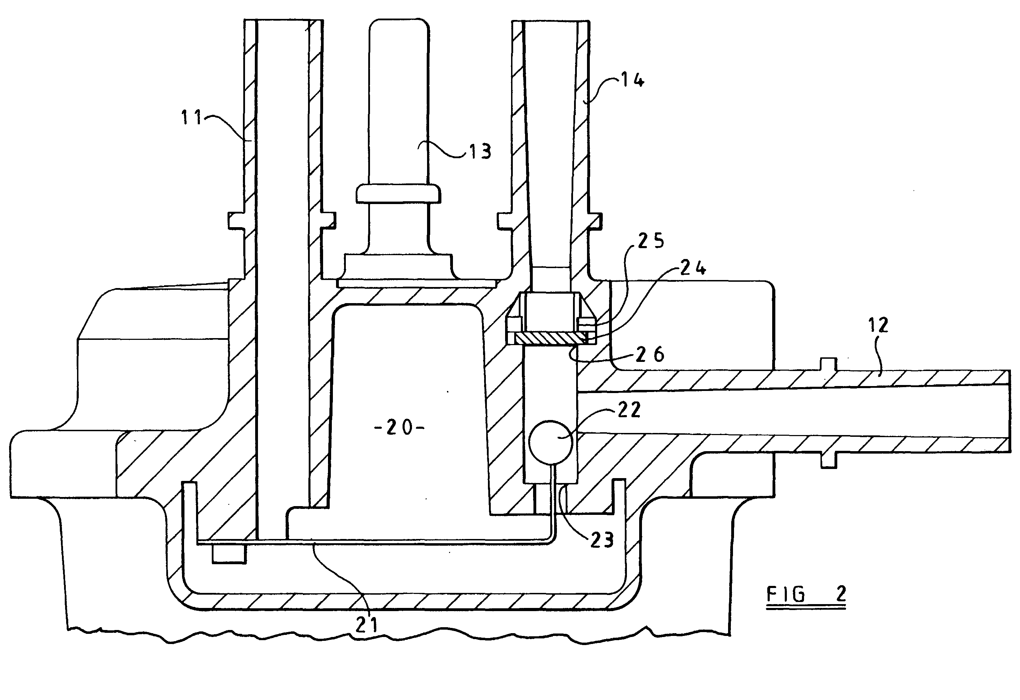

As illustrated in Figure 2, a bimetallic member 21 is located within the side chamber 20, the bimetallic member 21 being arranged to flex depending upon the temperature of the fuel within the side chamber 20. The bimetallic member 21 is shaped to cooperate with a spherical valve member 22 which is engageable with a seating 23 to control communication between the second inlet port 12 and the side chamber 20. The bimetallic member 21, valve member 22 and seating 23 together constitute a temperature controlled diverter valve. The bimetallic member 21 is arranged such that, when the fuel temperature within the side chamber 20 is low, the bimetallic member 21 occupies the position illustrated in Figure 2 in which the spherical valve member 22 is lifted from the seating 23, and thus communication is permitted between the second inlet port 12 and the side chamber 20. As the temperature of the fuel within the side chamber 20 increases, the bimetallic member 21 will flex in a downward direction, thus permitting movement of the valve member 22 towards its seating, restricting fuel flow from the second inlet port 12 to the side chamber 20, and a point will be reached beyond which the valve member 22 is able to engage the seating 23, breaking the communication between the second inlet port 12 and the side chamber 20.

The second inlet port 12 further communicates with the return port 14, a non-return valve in the form of a valve member 24 which is resiliently biased by a spring 25 into engagement with a seating 26 conveniently being provided to ensure that fuel is able to flow from the second inlet port 12 to the return port 14, but to substantially prevent fuel and/or gas or vapour flow in the reverse direction. The valve member 24 of the non-return valve conveniently comprises a plate formed of rubber or a rubber-like material. It will be appreciated, however, that the valve member may be of other forms. Similarly, the valve member 22 of the diverter valve may be of a shape other than a spherical shape.

In use, with the ports connected to appropriate fuel lines, operation of the high pressure fuel pump or a low pressure fuel pump located intermediate the filter and the high pressure fuel pump will result in fuel being drawn from the filter through the outlet port 13, and as a result, the fuel pressure at the clean side of the filter medium 16 will fall. The reduced fuel pressure at the clean side of the filter member 16 will result in fuel being drawn from the side chamber 20 to the volume 15 and through the filter medium 16. The action of fuel being drawn from the side chamber 20 will cause fuel to be drawn from the fuel reservoir through the first inlet port 11 to the side chamber 20. Further, if the fuel temperature within the side chamber 20 is relatively low as would occur upon initial engine start-up under certain atmospheric conditions, then the bimetallic member 21 will occupy a position similar to that illustrated in Figure 2 in which it ensures that the valve member 22 is spaced from its seating 23. In this position, the relatively low pressure within the side chamber 20 will further result in fuel from the second inlet port 12 being drawn towards the side chamber 20. The fuel from the second inlet port 12 is relatively warm as it has been passed through the high pressure fuel pump. It has also been filtered prior to being supplied to the fuel pump. The supply of such warm, filtered fuel to the side chamber 20 and volume 15 will result in the fuel temperature applied to the filter medium 16 being relatively high, and thus the risk of the formation of wax particles within the fuel which may cause choking of the filter medium 16 is reduced. As the fuel temperature within the side chamber 20 increases, the bimetallic member 21 will flex in a downward direction, and the spherical valve member 22 will move towards its seating 23, thus restricting the return of fuel from the second inlet port 12 to the side chamber 20, this flow eventually ceasing. Thus, the proportion of the fuel supplied to the filter medium from the fuel reservoir through the first inlet port 11 will gradually rise.

The provision of the diverter valve leads to the back pressure on the line connected to the second inlet port 12 being very low, and as the valve gradually moves between its fully open and closed positions, the valve does not cause sudden significant variations in the back pressure which could adversely affect operation of the fuel injection equipment connected to this line.

The provision of the non-return valve between the second inlet port 12 and the return port 14 is particularly advantageous when the spherical valve member 22 is lifted from its seating as, in the absence of such a non-return valve, in addition to drawing fuel from the second inlet port 12 to the side chamber 20, if the end of the passage or fuel line remote from the end which is connected to the return port 14 is not permanently submerged in fuel, then air or vapour may be drawn into the side chamber 20. Where the line connected to the return port 14 is continuously submerged, then the provision of the non-return valve is of less importance. Indeed, where the provision of the non-return valve can be avoided, then it will be appreciated that the location of the return port 14 in the upper part of the filter body 10 results in the provision of a permanent air vent whereby air can be bled to the fuel tank.

As described hereinbefore, during operation of the filter, air will tend to accumulate within the upper part of the chamber 15 rather than passing in an uncontrolled manner in the form of large bubbles through the outlet port 13. The air collected in the upper part of the filter body 10 will continue with the flow of fuel in a controlled manner in the form of a stream of small air bubbles, the formation of the small air bubbles resulting from the passage of the air through the small openings 19.

In addition to the separation of air from the fuel, water and other relatively dense contaminants will tend to separate from the fuel, these contaminants tending to flow in a downward direction, passing between the lower support plate 17 and the lower part 10a through openings 17a provided in the outer periphery of the lower support plate 17, the water and dense contaminants collecting in the bottom of the lower part 10a. If desired, a drainage hole may be provided in the lower part 10a, the drainage hole being closed by an appropriate plug in use, the plug being removed at appropriate intervals to permit the drainage of water and dense contaminants from the body 10.

The operation which must be performed upon servicing in order to replace the filter medium is relatively simple compared to the operations necessary with conventional filters in that all that is required is for the fuel lines to be removed from the ports, the filter body 10 removed and replaced with a fresh filter body containing a fresh filter medium, and the fuel lines connected to the ports of the new filter body 10. As the parts of the filter body 10 are non-removably, sealingly secured to one another during manufacture, no steps need to be performed during the servicing procedure to secure the various parts of the filter to one another or to ensure that an appropriate seal is formed.

Although the description hereinbefore is of a filter having a filter medium of star-like, pleated paper form, and incorporating a temperature sensitive diverter valve for the avoidance of choking of the filter due to the wax formation, and air management facilities, it will be appreciated that depending upon the application in which the filter is to be used, modifications can be made to the filter to omit or alter the form of the various parts of the filter. Further, any shape can be chosen for the filter body, the choice of shape not being limited by the need to provide a seal arrangement.

The diverter valve illustrated in Figure 2 may also be incorporated within a conventional filter head, if desired, and this patent application extends to the use of such a diverter valve in a typical filter head.

## Claims

1. A fuel filter comprising a filter body (10) having opposing filter body ends, the filter body defining an internal chamber (15) within which a filter medium (16) is to be located, the filter medium (16) having an outer periphery and a filter member having a first end and a second end, said first end being secured to a support plate (17), wherein the support plate (17) has an outer periphery which engages the inner surface of the filter body (10), the filter body (10) being of multi-part construction, the parts of the filter body (10) being non-removably, sealingly secured to one another, the filter body (10) being shaped to define an inlet port (11) and an outlet port (13) communicating with dirty and clean sides of the filter medium (16), respectively, both the inlet (11) and outlet ports (13) being positioned at the same body end of the filter body (10), **characterised by** said second end being secured to the filter body (10), whereby fuel can only flow from the outer periphery of the filter medium (16) to an inner part of the filter medium (16) by flowing though the filter medium (16).

2. The filter as claimed in Claim 1, wherein the parts (10a, 10b) of the filter body (10) are secured to one another by means of a friction welding technique.

3. The filter as claimed in Claim 1 or 2, wherein the filter medium (16) is a pleated paper filter member.

4. The filter as claimed in any one of Claims 1 to 3, wherein the second end of the filter member is bonded directly to the filter body (10).

5. The filter as claimed in any one of Claims 1 to 4, wherein the filter body (10) further defines a second inlet port (12) and a return port (14).

6. The filter as claimed in Claim 5, further comprising a temperature sensitive valve operable to control whether fuel entering the filter body (10) through the second inlet port (12) is supplied to the dirty side of the filter medium (16) or supplied to the return port (14) for return to a fuel reservoir.

7. The filter as claimed in Claim 6, wherein the temperature sensitive valve comprises a ball valve.

8. The filter as claimed in Claim 7, wherein the ball valve comprises a valve member (22) which is moveable under the influence of a bimetallic element (21).

9. The filter as claimed in any one of Claims 6 to 8, further comprising a non-return valve member (24) resiliently biased into engagement with a seating (26) to ensure that fuel is able to flow from the second inlet port (12) to the return port (14), but to substantially prevent fuel and/or gas vapour flow in the reverse direction.

10. The filter as claimed in Claim 9, wherein the non-return valve member (24) comprises a plate formed from rubber or a rubber-like material.

11. The filter as claimed in any of Claims 1 to 10, further comprising a downwardly depending tubular member (18) which is secured to the filter body (10), the tubular member (18) serving to force fuel flow in a downward direction prior to entering the tubular member (18), in use.

12. The filter as claimed in Claim 11, wherein the tubular member (18) is provided with one or more openings (19) through which air is able to flow at a relatively low rate.

## Patentansprüche

1. Kraftstofffilter, umfassend einen Filterkörper (10) mit einander gegenüberliegenden Filterkörperenden, wobei der Filterkörper eine Innenkammer (15) begrenzt, in welcher ein Filtermedium (16) angeordnet werden soll, wobei das Filtermedium (16) einen Außenrand und ein Filterelement mit einem ersten Ende und einem zweiten Ende aufweist, wobei das erste Ende an einer Trägerplatte (17) befestigt ist, worin die Trägerplatte (17) einen Außenrand besitzt, der an der inneren Oberfläche des Filterkörpers (10) angreift, wobei der Filterkörper (10) eine mehrteilige Konstruktion darstellt, deren Teile unentfernbar voneinander und dichtend aneinander befestigt sind, wobei der Filterkörper (10) eine Gestalt besitzt, die einen Einlassanschluss (11) und einen Auslassanschluss (13), welche mit einer Schmutzseite bzw. einer Reinseite des Filtermediums (16) in Verbindung stehen, bildet, wobei sowohl der Einlassanschluss (11) als auch der Auslassanschluss (13) am selben Körperende des Filterkörpers (10) angeordnet sind, **dadurch gekennzeichnet, dass** das zweite Ende am Filterkörper (10) befestigt ist, so dass Kraftstoff nur durch Strömen durch das Filtermedium (16) hindurch vom Außenrand oder Außenbereich des Filtermediums (16) zu einem inneren Teil des Filtermediums (16) fließen kann,

2. Filter nach Anspruch 1, worin die Teile (10a, 10b) des Filterkörpers (10) mit Hilfe einer Reibschweißtechnik aneinander befestigt sind.

3. Filter nach Anspruch 1 oder 2, worin das Filtermedium (16) ein gefälteltes Papierfilterelement ist.

4. Filter nach einem der Ansprüche 1 bis 3, worin das zweite Ende des Filterelements direkt mit dem Filterkörper (10) verbunden ist.

5. Filter nach einem der Ansprüche 1 bis 4, worin der Filterkörper (10) weiterhin einen zweiten Einlassanschluss (12) und einen Rückführungsanschluss (14) bildet.

6. Filter nach Anspruch 5, weiterhin umfassend ein temperaturempfindliches Ventil, das betätigt werden kann, um zu steuern, ob Kraftstoff, der durch den zweiten Einlassanschluss (12) in den Filterkörper (10) eintritt, der Schmutzseite des Filtermediums (16) zugeführt wird oder zur zurückführung in einen Kraftstoffspeicher dem Rückführungsanschluss (14) zugeführt wird.

7. Filter nach Anspruch 6, worin das temperaturempfindliche Ventil ein Kugelventil umfasst.

8. Filter nach Anspruch 7, worin das Kugelventil ein Ventilelement (22) aufweist, das unter dem Einfluss eines Bimetall-Elements (21) bewegbar ist.

9. Filter nach einem der Ansprüche 6 bis 8, weiterhin umfassend ein Rückschlagventilelement (24), das elastisch in Anlage an einen Sitz (26) gespannt ist, um sicherzustellen, dass Kraftstoff vom zweiten Einlassanschluss (12) zum Rückführungsanschluss (14) fließen kann, aber um im Wesentlichen zu verhindern, dass Kraftstoff und/oder verdampfter Kraftstoff in die umgekehrte Richtung strömt.

10. Filter nach Anspruch 9, worin das Rückschlagventilelement (24) eine Platte umfasst, die aus Gummi oder einem gummiartigen Material gebildet ist.

11. Filter nach einem der Ansprüche 1 bis 10, weiterhin umfassend ein herabhängendes, rohrförmiges Element (18), das am Filterkörper (10) befestigt ist, wobei das rohrförmige Element (18) dazu dient, den Fluss von Kraftstoff in Abwärtsrichtung vor dem Eintritt in das rohrförmige Element (18) zu erzwingen.

12. Filter nach Anspruch 11, worin das rohrförmige Element (18) mit einer oder mehreren Öffnungen (1:9) ausgestattet ist, durch die Luft in relativ geringer Geschwindigkeit bzw. Menge pro Zeiteinheit hindurchtreten kann.

## Revendications

1. Filtre à carburant comprenant un corps filtrant (10) présentant des extrémités opposées de corps filtrant, le corps filtrant définissant une chambre interne (15) à l'intérieur de laquelle doit être placé un milieu filtrant (16), le milieu filtrant (16) présentant une périphérie externe et un élément filtrant présentant une première extrémité et une deuxième extrémité, la première extrémité étant fixée à une plaque de support (17), dans lequel la plaque de support (17) présente une périphérie externe qui se met en prise avec la surface interne du corps filtrant (10), le corps filtrant (10) étant d'une construction à plusieurs parties, les parties du corps filtrant (10) étant inamovibles, fixées hermétiquement les unes aux autres, le corps filtrant (10) étant formé pour définir un orifice d'entrée (11) et un orifice de sortie (13) communiquant avec les côtés encrassés et propres du milieu filtrant (16), respectivement, les orifices d'entrée (11) et de sortie (13) étant positionnés tous les deux à la même extrémité de corps du corps filtrant (10), **caractérisé en ce que** ladite deuxième extrémité est fixée au corps filtrant (10) de sorte que le carburant ne peut circuler que depuis la périphérie externe du milieu filtrant (16) vers une partie interne du milieu filtrant (16) en circulant à travers le milieu filtrant (16).

2. Filtre selon la revendication 1, dans lequel les parties (10a, 10b) du corps filtrant (10) sont fixées l'une à l'autre au moyen d'une technique de soudage par friction.

3. Filtre selon la revendication 1 ou 2, dans lequel le milieu filtrant (16) est un élément filtrant en papier plissé.

4. Filtre selon l'une quelconque des revendications 1 à 3, dans lequel la seconde extrémité de l'élément filtrant est collée directement au corps filtrant (10).

5. Filtre selon l'une quelconque des revendications 1 à 4, dans lequel le corps filtrant (10) définit en outre un second orifice d'entrée (12) et un orifice de retour (14).

6. Filtre selon la revendication 5, comprenant en outre une soupape thermosensible capable de fonctionner pour contrôler si le carburant pénétrant dans le corps filtrant (10) à travers le second orifice d'entrée (12) est amené au côté encrassé du milieu filtrant (16) ou amené à l'orifice de retour (14) pour revenir vers un réservoir de carburant.

7. Filtre selon la revendication 6, dans lequel la soupape thermosensible comprend un robinet à tournant sphérique.

8. Filtre selon la revendication 7, dans lequel le robinet à tournant sphérique comprend un élément de robinet (22) qui est mobile sous l'influence d'un élément bimétallique (21).

9. Filtre selon l'une quelconque des revendications 6 à 8, comprenant en outre un élément de clapet de non-retour (24) inclinée de façon élastique en prise avec une portée (26) pour garantir que le carburant est capable de circuler du second orifice d'entrée (12) à l'orifice de retour (14), mais pour empêcher sensiblement la vapeur de carburant et/ou de gaz de circuler dans la direction inverse.

10. Filtre selon la revendication 9, dans lequel l'élément de clapet de non-retour (24) comprend une plaque formée en caoutchouc ou en matériau semblable à du caoutchouc.

11. Filtre selon l'une quelconque des revendications 1 à 10, comprenant en outre un élément tubulaire (18) dépendant vers le bas qui est fixé au corps filtrant (10), l'élément tubulaire (18) servant à forcer le carburant à circuler dans une direction orientée vers le bas avant de pénétrer dans l'élément tubulaire (18), à l'utilisation.

12. Filtre selon la revendication 11, dans lequel l'élément tubulaire (18) est pourvu d'une ou plusieurs ouverture(s) (19) à travers laquelle(lesquelles) l'air est capable de circuler à une vitesse relativement basse.
